(19) Europäisches Patentamt / European Patent Office / Office européen des brevets

(11) **EP 4 722 275 A1**

(12) **EUROPEAN PATENT APPLICATION**
published in accordance with Art. 153(4) EPC

(43) Date of publication:
08.04.2026 Bulletin 2026/15

(21) Application number: 24815587.1

(22) Date of filing: 30.05.2024

(51) International Patent Classification (IPC):
*C08J 3/20* $^{(2006.01)}$   *C08L 27/12* $^{(2006.01)}$

(52) Cooperative Patent Classification (CPC):
C08J 3/20; C08L 27/12

(86) International application number:
PCT/JP2024/019936

(87) International publication number:
WO 2024/248107 (05.12.2024 Gazette 2024/49)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 02.06.2023 JP 2023091858

(71) Applicant: AGC INC.
Chiyoda-ku,
Tokyo 1008405 (JP)

(72) Inventors:
• **MATSUMOTO Mariko**
**Tokyo 100-8405 (JP)**
• **ABE Kaori**
**Tokyo 100-8405 (JP)**
• **OTSUGU Satoshi**
**Tokyo 100-8405 (JP)**
• **TAGUCHI Daisuke**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING FLUORORESIN COMPOSITION**

(57) A method for producing a fluororesin composition comprising: a first fluororesin having a thermal history of having been heated to a melting point or higher; and a second fluororesin having no thermal history of having been heated to a melting point or higher, wherein the first fluororesin and the second fluororesin are non-melt-formable fluororesins, the method comprising washing a crushed product containing the first fluororesin, and mixing the crushed product after washing and the second fluororesin, wherein a thermogravimetric weight loss rate when the washed crushed product is heated from 30 to 280°C at a rate of 10°C/min is 3% or less as calculated by formula I below:

$$\text{thermogravimetric weight loss rate} = (W_{B1} - W_{A1}) / W_{B1} \times 100 \quad \text{Formula I,}$$

wherein $W_{B1}$ is a mass of the crushed product at 30°C, and $W_{A1}$ is A mass of the crushed product at 280°C.

EP 4 722 275 A1

## Description

TECHNICAL FIELD

The present invention relates to a method for producing a fluororesin composition.

Priority is claimed on Japanese Patent Application No. 2023-091858, filed June 2, 2023, the content of which is incorporated herein by reference.

BACKGROUND ART

A polytetrafluoroethylene resin (molding powder) obtained by suspension polymerization of tetrafluoroethylene (TFE) is molded by compression molding and then sintered to obtain a molded body. The molded body obtained by sintering is processed into a molded product having a desired shape by cutting processing or the like.

However, the polytetrafluoroethylene resin that has been sintered once (i.e., sintered PTFE), such as cutting chips generated during processing, is hard, and even compression after crushing cannot integrate its pieces, making the molding impossible. Therefore, the reuse of sintered PTFE was difficult.

Patent Document 1 discloses that, in a case of a molded body obtained by sintering a compression-molded product of a mixture of a powder of sintered PTFE and a PTFE dispersion (a dispersion liquid of unsintered PTFE) obtained by emulsion polymerization of TFE, a porosity after the sintering decreases and a tensile strength after the sintering increases as a mixing proportion of the unsintered PTFE increases. For example, an example is disclosed in which the porosity after the sintering is 0% in a case where the mixing proportion of the unsintered PTFE is 100%.

Citation List

Patent Document

Patent Document 1: Japanese Patent No. 6612001

SUMMARY OF THE INVENTION

Technical Problem

When the inventors of the present invention produced a sintered PTFE molded product by the method described in Patent Document 1, using a powder obtained by crushing the cutting chips of sintered PTFE, it was confirmed that the chemical resistance was inferior compared to molded products produced using unsintered PTFE.

An object of the present invention is to provide method for producing a fluororesin composition that can provide a molded body having a high chemical resistance, while using a fluororesin having a thermal history of having been heated to a melting point or higher. Solution to Problem

The embodiments of the present invention are as follows.

[1] A method for producing a fluororesin composition comprising: a first fluororesin having a thermal history of having been heated to a melting point or higher; and a second fluororesin having no thermal history of having been heated to a melting point or higher, wherein the first fluororesin and the second fluororesin are non-melt-formable fluororesins, the method comprising washing a crushed product containing the first fluororesin, and mixing the crushed product after washing and the second fluororesin, wherein a thermogravimetric weight loss rate when the washed crushed product is heated from 30 to 280°C at a rate of 10°C/min is 3% or less as calculated by formula I below:

$$\text{thermogravimetric weight loss rate} = (W_{B1} - W_{A1}) / W_{B1} \times 100 \quad \text{Formula I}$$

wherein $W_{B1}$ is a mass of the crushed product at 30°C, and $W_{A1}$ is A mass of the crushed product at 280°C.

[2] The method according to [1], in which the first fluororesin has a tetrafluoroethylene unit, and an amount of the tetrafluoroethylene unit with respect to a total mass of the first fluororesin is 99% by mass or more.

[3] The method according to [1] or [2], in which the second fluororesin has a tetrafluoroethylene unit, and an amount of the tetrafluoroethylene unit with respect to a total mass of the second fluororesin is 99% by mass or more.

[4] The method according to any one of [1] to [3], in which an amount of the first fluororesin with respect to a total mass of the first fluororesin and the second fluororesin is 10% by mass or more.

Advantageous Effects of Invention

The present invention can provide method for producing a fluororesin composition that can provide a molded body having a high chemical resistance, while using a fluororesin having a thermal history of having been heated to a melting point or higher.

DESCRIPTION OF EMBODIMENTS

Throughout the present specification and claims, the following terms have respective means as explained below.

The "unit based on a monomer" is a generic phrase for an atomic group directly formed by polymerizing one monomer molecule and an atomic group obtained by chemically converting a part of the atomic group. In the present specification, a unit based on a monomer is also simply referred to as a monomer unit.

The "monomer" refers to a compound having a polymerizable carbon-carbon double bond.

The "melting point" means a temperature corresponding to a maximum value of a melting peak measured by a differential scanning calorimetry (DSC) method.

Further, "to" indicating a numerical range means that the numerical values described before and after "to" are included as the lower limit and the upper limit of the range.

The "average particle diameter" means a 50% cumulative value (median diameter; D50) in a number-based particle diameter distribution, which is obtained using a laser diffraction/scattering type particle size distribution measuring device (for example, LA-920 measuring device manufactured by HORIBA, Ltd.).

The "melt-formable" means that melt flowability is exhibited.

The "melt flowability is exhibited" means that the existence of a temperature at which a melt flow rate is 0.1 to 1,000 g/10 minutes at a temperature that is higher than a melting point of a resin by 20°C or higher, under a condition of a load of 49 N.

The "melt flow rate" means a melt mass-flow rate (MFR) defined in JIS K 7210:1999 (ISO 1133:1997).

The "non-melt-formable" means that the melt flowability is not exhibited.

The "standard specific gravity (hereinafter, also referred to as "SSG")" is a value indicating an average molecular weight, and a higher SSG value indicates a smaller molecular weight. The "specific gravity" can be measured in accordance with ASTM D1457-91a, D4895-91a.

<<Production method for fluororesin composition>>

The fluororesin composition production method according to the present embodiment is a method for producing a fluororesin composition containing a first fluororesin (hereinafter, also referred to as "fluororesin 1") having a thermal history of having been heated to a melting point or higher, and a second fluororesin (hereinafter, also referred to as "fluororesin 2") having no thermal history of having been heated to a melting point or higher. The fluororesin 1 and the fluororesin 2 are non-melt-formable fluororesins. The fluororesin composition production method of the present embodiment includes washing the crushed product containing the fluororesin 1, and mixing the washed crushed product and the fluororesin 2. The thermogravimetric weight loss rate calculated by the following formula I when the washed crushed product is heated from 30 to 280°C at a rate of 10°C/min is 3% or less.

$$\text{Thermogravimetric weight loss rate} = (W_{B1} - W_{A1}) / W_{B1} \times 100 \quad \text{Formula I}$$

wherein $W_{B1}$ is a mass of the crushed product at 30°C, and $W_{A1}$ is A mass of the crushed product at 280°C.

<Non-melt-formable fluororesin>

Both the fluororesin 1 and the fluororesin 2 are non-melt-formable fluororesins.

The fluororesin 1 and the fluororesin 2 may be the same or different from each other.

The fluororesin 1 and the fluororesin 2 may each independently be used alone or in combination of two or more kinds of fluororesins. When using two or more kinds of fluororesins in combination, there is no particular limitation as long as the mixture of the two or more kinds of fluororesins is non-melt-formable.

As the fluororesin 1 and the fluororesin 2, a polymer having a tetrafluoroethylene unit (hereinafter, also referred to as "TFE unit") is preferable; and examples thereof include polytetrafluoroethylene (PTFE), a tetrafluoroethylene-ethylene copolymer, a tetrafluoroethylene-hexafluoropropylene copolymer, a tetrafluoroethylene-perfluoro(alkyl vinyl ether) copolymer, a tetrafluoroethylene-chlorotrifluoroethylene copolymer, a tetrafluoroethylene-ethylene-hexafluoropropylene copolymer, and a tetrafluoroethylene-hexafluoropropylene-vinylidene fluoride copolymer.

It is preferable that the fluororesin 1 and the fluororesin 2 are each independently PTFE. In the PTFE, an amount of the TFE unit with respect to the total mass of the fluororesin is preferably 99% by mass or more. The amount of the TFE unit with respect to the total mass of the PTFE is more preferably 99.5% by mass or more, and may be 100% by mass.

Examples of a monomer unit other than the TFE unit include the above-described ethylene unit, a hexafluoropropylene unit, a perfluoro(alkyl vinyl ether) unit, a chlorotrifluoroethylene unit, a vinylidene fluoride unit, and monomer units derived from perfluoro(2,2-dimethyl-1,3-dioxole), perfluoro(4-methoxy-1,3-dioxole), perfluoroalkylethylene, and the like. The number of the monomer units other than the TFE unit may be 1 or 2 or more. By containing the monomer unit other than the TFE unit, crystallization of the PTFE is suppressed to some extent, and thus the PTFE improves in terms of a tensile strength, a tensile elongation, dielectric breakdown resistance, creep resistance, and the like.

(Fluororesin 1)

The fluororesin 1 has a thermal history of having been heated to a melting point or higher one or more times. The fluororesin 1 can be obtained by crushing cutting chips produced while processing a primary molded body, which is manufactured by heating the fluororesin 1 to a melting point or higher, into a secondary molded body such as an industrial component having a desired shape, or obtained by crushing a secondary molded body that is no longer needed. The crushing can be performed by a crusher or the like. After the crushing, the fluororesin 1 may be further pulverized. The above-described heating may be, for example, heating by sintering required for manufacturing the molded body.

In a case where the fluororesin 1 is heated to a melting point or higher, a melting point of the fluororesin 1 is lowered as compared with a melting point of the fluororesin 1 before being heated to a melting point or higher.

The "fluororesin 1 has a thermal history of having been heated to a melting point or higher one or more times" can be confirmed by differential scanning calorimetry (DSC).

The melting point of the fluororesin 1 before being heated to a melting point or higher is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 355°C, and still more preferably 150°C to 350°C.

In a case where the melting point is within the above-described range, a mechanical strength of the molded body to be obtained is likely to improve.

The melting point of the fluororesin 1 is preferably 335°C or lower, and more preferably 330°C or lower. The lower limit value of the melting point is not particularly limited, but is preferably 100°C or higher and more preferably 150°C or higher. The melting point is preferably 100°C to 335°C and more preferably 150°C to 330°C.

In a case where the melting point is within the above-described range, a mechanical strength of the molded body to be obtained is likely to improve.

A bulk density of the fluororesin 1 is preferably 100 g/L or more, more preferably 105 g/L or more, and still more preferably 110 g/L or more. In a case where the bulk density is equal to or higher than the above-described lower limit value, the amount of air entrapped during the manufacturing of the molded body is small, and thus degassing ability is excellent, and the fluororesin 1 is likely to be favorably fused between powder particles. Furthermore, the molded body to be obtained is less likely to have voids remaining, and thus uniformity of the molded body is also likely to improve.

An average particle diameter of the fluororesin 1 is preferably 1 to 500 $\mu$m, more preferably 5 to 300 $\mu$m, and still more preferably 5 to 100 $\mu$m.

In a case where the average particle diameter of the fluororesin 1 is within the above-described range, the uniformity of the molded body to be obtained improves.

The fluororesin 1 may be a crushed product of a molded body that has been molded and processed by a method including a step of heating, to a melting point or higher, a molding material containing PTFE obtained by suspension polymerization.

The PTFE obtained by suspension polymerization has an extremely high melt viscosity and exhibits such non-melt-formability that does not allow molding to be performed by a general molding method for thermoplastic resins, such as extrusion molding and injection molding. Therefore, molding of the PTFE manufactured by suspension polymerization (hereinafter, also referred to as "molding powder") is implemented by a method in which the molding powder is filled into a mold, compression-molded, and then sintered.

Specifically, in the method of molding the molding powder, first, the mold is filled with the molding powder at normal temperature, the molding powder is compression-molded to obtain a preliminary molded body, and the preliminary molded body is heated to a melting point or higher of the PTFE to be sintered, thereby obtaining a primary molded body. The molding powder may be granulated and used as a granulated product as necessary. In the granulation, an inorganic filler or other optional components may be blended.

Thereafter, the primary molded body is subjected to mechanical processing such as cutting processing, to be processed into a secondary molded body having a desired shape. Examples of the secondary molded body include industrial members such as a gasket, a lining, and an insulating film, and a square tank that receives a strong acid or a strong alkali in a semiconductor industry.

Cutting chips, scraps, or the like (hereinafter, also referred to as "cutting chips or the like"), which are produced when cutting the primary molded body to manufacture the secondary molded body, a powder obtained by crushing the cutting chips or the like, and a powder such as a powder obtained by crushing the secondary molded body that is no longer needed can be used as the fluororesin 1. In the present specification, the above-described cutting chips or the like, the above-described powders, and the like are also collectively referred to as "crushed products". The secondary molded body or the cutting chips or the like can be crushed by a crusher or the like. After the crushing, the crushed products may be further pulverized. A volume of one crushed product is, for example, 50 cm$^3$ or less.

The fluororesin composition production method according to the present embodiment includes washing a crushed product containing the fluororesin 1. The crushed product consists essentially of only fluororesin 1. On the other hand, during the machining process performed on the primary molded body, trace amounts of impurities such as oil stains and dust may adhere to the fluororesin 1. That is, the crushed product consists of the fluororesin 1 and the aforementioned trace amounts of impurities.

The thermogravimetric weight loss rate of the pre-washing crushed product, calculated by the aforementioned formula I (hereinafter also referred to as "pre-washing thermogravimetric weight loss rate"), is preferably 3 to 20%, more preferably 3 to 15%, and even more preferably 3 to 10%.

When the pre-washing thermogravimetric weight loss rate is not less than the lower limit value described above, the effects of the present invention are more easily obtained. When the pre-washing thermogravimetric weight loss rate is not more than the upper limit value described above, the chemical resistance of the resulting molded article is more likely to improve.

The post-washing thermogravimetric weight loss rate of the washed crushed product, calculated by the aforementioned formula I (hereinafter also referred to as "post-washing thermogravimetric weight loss rate"), is 3% or less, preferably 2% or less, and more preferably 1.5% or less. The lower limit of the post-washing thermogravimetric weight loss rate is not particularly limited, but may be 0%. That is, the post-washing thermogravimetric weight loss rate is preferably 0 to 3%, more preferably 0 to 2%, and even more preferably 0 to 1.5%.

When the post-washing thermogravimetric weight loss rate is not more than the upper limit value described above, the chemical resistance of the resulting molded body is more likely to improve. Further, from the viewpoint of more reliably obtaining the effects of the present invention, it is most preferable that the post-washing thermogravimetric weight loss rate is 0%.

Examples of a washing solution for washing the crushed products include water, an organic solvent, and a surfactant. In addition, a washing solution such as an aqueous solution containing two or more kinds thereof may be used. An amount of the washing solution used is preferably 10 to 5,000 parts by mass, more preferably 50 to 4,000 parts by mass, and still more preferably 100 to 3,000 parts by mass with respect to 100 parts by mass of the crushed products. The washing may be performed by a method 1 in which the crushed products is immersed in the washing solution and allowed to stand, a method 2 in which stirring is performed, or a method 3 in which the washing solution is continuously supplied to the crushed products. An immersion time is preferably longer than 0 hours and 100 hours or shorter, more preferably longer than 0 hours and 80 hours or shorter, and still more preferably longer than 0 hours and 60 hours or shorter. A temperature of the washing solution is preferably 0°C to 200°C and more preferably 10°C to 150°C. In a case of the method 1 and the method 2, it is preferable to perform solid-liquid separation of the crushed products and the washing solution by filtration or the like, and then perform drying. In the method 1 and the method 2, in a case where a sequence from the addition of the washing solution to the mixture to the solid-liquid separation is counted as one washing, the washing is preferably performed 1 to 30 times, more preferably 1 to 25 times, and still more preferably 2 to 20 times. It is also preferable to perform the washing of the method 3 a plurality of times.

The crushed products to be washed may be a crushed product such as cutting chips produced directly in a case of manufacturing the secondary molded body, or a crushed product of a powder obtained by crushing the secondary molded body or the cutting chips or the like. In terms of operability, a crushed product such as cutting chips produced directly in a case of manufacturing the secondary molded body is preferable.

(Fluororesin 2)

The fluororesin 2 has no thermal history of having been heated to a melting point or higher.

The melting point of the fluororesin 2 is preferably 360°C or lower, more preferably 355°C or lower, and still more preferably 350°C or lower. The lower limit value of the melting point is not particularly limited, but is preferably 100°C or higher and more preferably 150°C or higher. The melting point is preferably 100°C to 360°C, more preferably 100°C to 350°C, and still more preferably 150°C to 350°C.

In a case where the melting point is within the above-described range, a mechanical strength of the molded body to be obtained is likely to improve.

The fluororesin 2 may be, for example, a fluororesin manufactured by emulsion polymerization.

The emulsion polymerization method is a polymerization method in which a monomer is polymerized in an aqueous medium containing water to obtain a dispersion liquid containing particles of the fluororesin 2. In general, the emulsion polymerization is performed by stirring a reaction solution containing water, a polymerization initiator, and a surfactant, and polymerizing the monomer in the reaction solution.

From the viewpoint of suppressing coloration of the molded body to be obtained, an amount of a nonionic surfactant is preferably 2 parts by mass or less, more preferably 1 part by mass or less, and still more preferably 0.1 parts by mass or less with respect to 100 parts by mass of the fluororesin in the dispersion liquid.

Examples of the nonionic surfactant will be described later.

An amount of the fluororesin 2 in the dispersion liquid is preferably 5% to 40% by mass, more preferably 7% to 35% by mass, and still more preferably 10% to 30% by mass.

An average particle diameter of the fluororesin 2 in the dispersion liquid is preferably 0.05 to 0.5 $\mu$m, more preferably 0.08 to 0.45 $\mu$m, and still more preferably 0.10 to 0.35 $\mu$m. In a case where the average particle diameter is within the above-described range, emulsion stability is excellent.

It is preferable that the fluororesin 2 contains PTFE obtained by the emulsion polymerization method.

In a method of producing PTFE by emulsion polymerization, a TFE monomer is homopolymerized alone in the above-described reaction solution, or a TFE monomer and a monomer other than the TFE monomer are copolymerized in the above-described reaction solution, thereby obtaining a dispersion liquid in which PTFE particles are dispersed in a dispersion medium.

For example, the TFE monomer is subjected to emulsion polymerization under pressure of preferably 0.5 to 3.0 MPa over a period of 1 to 20 hours in the presence of an aqueous medium, a polymerization initiator, an anionic fluorine-containing emulsifier, and a stabilizing auxiliary agent to obtain a dispersion liquid. Furthermore, the above-described nonionic surfactant may be blended. In addition, the dispersion liquid may be obtained without using a fluorine-based surfactant by the method described in PCT International Publication No. WO2021/085470, PCT International Publication No. WO2022/181662, and the like.

Examples of the anionic fluorine-containing emulsifier will be described later.

An amount of the anionic fluorine-containing emulsifier used in the emulsion polymerization step of the TFE monomer is preferably 0.15 to 2.0 parts by mass, more preferably 0.2 to 1.0 parts by mass, and still more preferably 0.2 to 0.5 parts by mass with respect to 100 parts by mass of the PTFE to be produced.

As the stabilizing auxiliary agent, paraffin wax, a fluorine-based oil, a fluorine-based solvent, a silicone oil, or the like is preferable, and paraffin wax is more preferable. The stabilizing auxiliary agent may be used alone or in combination of two or more kinds thereof.

The paraffin wax may be any of a liquid, a semisolid, or a solid at room temperature, and is preferably a saturated hydrocarbon having 12 or more carbon atoms. A melting point of the paraffin wax is preferably 40°C to 65°C and more preferably 50°C to 65°C. An amount of the stabilizing auxiliary agent used is preferably 0.1 to 12 parts by mass and more preferably 0.1 to 8 parts by mass with respect to 100 parts by mass of the aqueous medium to be used.

As the polymerization initiator, a water-soluble radical initiator, a water-soluble redox catalyst, or the like is preferably adopted. As the water-soluble radical initiator, a persulfate such as ammonium persulfate and potassium persulfate; or a water-soluble organic peroxide such as disuccinic acid peroxide, bisglutaric acid peroxide, and tert-butyl hydroperoxide is preferable. The polymerization initiator may be used alone or in combination of two or more kinds thereof. In addition, an oil-soluble initiator can also be used in the same manner. As the polymerization initiator, disuccinic acid peroxide is more preferable.

An amount of the polymerization initiator used is preferably 0.01 to 0.20 parts by mass and more preferably 0.01 to 0.15 parts by mass with respect to 100 parts by mass of the PTFE to be produced.

A standard specific gravity (SSG) of the PTFE resin in the dispersion liquid is an indicator of an average molecular weight of the PTFE, and the PTFE can be conceptually classified into a high-molecular-weight PTFE with the SSG of 2.14 or more and less than 2.22 and a low-molecular-weight PTFE when the SSG is 2.22 to 2.4. In a case where the molecular weight is low, physical properties of the PTFE are reduced, so that the SSG is preferably 2.14 or more and less than 2.22, and more preferably 2.14 to 2.21.

(Anionic fluorine-containing emulsifier)

Examples of the anionic fluorine-containing emulsifier used in the emulsion polymerization include a fluorine-containing emulsifier represented by General Formula (1) (hereinafter, also referred to as "fluorine-containing emulsifier (1)").

General Formula (1): $XCF_2CF_2(O)_mCF_2CF_2OCF_2COOA$

(in the formula, X is a hydrogen atom or a fluorine atom, A is a hydrogen atom, an alkali metal, or NH4, and m is 0 or 1)

The fluorine-containing emulsifier (1) is preferable in that polymerization stabilizing action of the PTFE particles is favorable.

From the viewpoint of polymerization stability, X is preferably a fluorine atom.

From the viewpoint of polymerization stability and mechanical stability of the dispersion liquid, m is preferably 1. Specific examples of A include H, Li, Na, K, and $NH_4$. $NH_4$ is preferable in that the fluorine-containing emulsifier (1) shows good solubility in water and metal ion components are less likely to remain as impurities.

Particularly preferred examples of the fluorine-containing emulsifier (1) include $CF_3CF_2CF_2CF_2OCF_2COONH_4$ and $C_2F_5OCF_2CF_2OCF_2COONH_4$ (hereinafter, referred to as EEA), and EEA is more preferable.

The fluorine-containing emulsifier (1) can be manufactured as follows. An ester of a corresponding non-fluorine-containing carboxylic acid or a partially fluorinated carboxylic acid is fluorinated using a known fluorination method such as a liquid phase fluorination method in which it is reacted with fluorine in a liquid phase, a fluorination method using cobalt fluoride, or an electrochemical fluorination method. An ester bond of the obtained fluorinated ester is hydrolyzed, followed by purification of the hydrolyzed product. The purified product is then neutralized with ammonia.

(Nonionic surfactant)

Examples of the nonionic surfactant blended in an aqueous emulsion liquid obtained by the emulsion polymerization include a nonionic surfactant represented by General Formula (2) (hereinafter, also referred to as "nonionic surfactant (2)") and a nonionic surfactant represented by General Formula (3) (hereinafter, also referred to as "nonionic surfactant (3)").

General Formula (2): $R^1$-O-D-H

(in the formula, $R^1$ is an alkyl group having 8 to 18 carbon atoms, O is an oxygen atom, and D is a polyoxyalkylene chain consisting of 5 to 20 oxyethylene groups and 1 or 2 oxypropylene groups)

General Formula (3): $R^2$-O-E-G

(in the formula, $R^2$ is an alkyl group having 6 to 18 carbon atoms, O is an oxygen atom, E is a polyoxyalkylene chain consisting of 1 to 3 oxybutylene groups and 5 to 20 oxyethylene groups, and G is a hydrogen atom or a methyl group)

The nonionic surfactant may be used alone or in combination of two or more kinds thereof.

The nonionic surfactant in the dispersion liquid is preferably one or more selected from the group consisting of the nonionic surfactant (2) and the nonionic surfactant (3), and two or more kinds thereof may be used in combination. The nonionic surfactant (2) and the nonionic surfactant (3) may be used in combination.

The nonionic surfactant is a mixture of a plurality of molecules having a certain chain length distribution or isomers, and a chain length of the polyoxyalkylene chain represents an average chain length of the plurality of molecules. The number of oxyethylene groups and oxypropylene groups in the polyoxyalkylene chain is an average value. In addition, in a case where a plurality of kinds of nonionic surfactants are mixed and used, similarly, an average value of the number of oxyalkylene groups in respective nonionic surfactants may be within the above-described range. In addition, each numerical value is not limited to an integer.

In the nonionic surfactant (2), the number of carbon atoms in the alkyl group represented by $R^1$ is preferably in a range of 8 to 18 and more preferably 10 to 16. In a case where the number of carbon atoms in $R^1$ is equal to or more than the lower limit value of the above-described range, the surface tension of the dispersion liquid is likely to be low, and thus the wettability is likely to be high. In a case where the number of carbon atoms equal to or less than the upper limit value, storage stability of the dispersion liquid is excellent.

In a case where the alkyl group has a branched structure such that the alkyl group as a hydrophobic group is branched in the middle, the wettability of the dispersion liquid is more likely to increase. The alkyl group having a branched structure is preferably an alkyl group having a branch in a region from a carbon atom at the base of the alkyl group to a fifth carbon atom, and more preferably an alkyl group having a branch in a region from a carbon atom at the base of the alkyl group to a third carbon atom. In addition, the carbon atom having a branch may be a secondary carbon atom or a tertiary carbon atom, and is preferably a secondary carbon atom.

Examples of the alkyl group having a branched structure include $C_{10}H_{21}CH(CH_3)CH_2$-, $C_9H_{19}CH(C_3H_7)$-, and $C_6H_{13}CH(C_6H_{13})$-.

In the nonionic surfactant (2), D as a hydrophilic group is a polyoxyalkylene chain consisting of 5 to 20 oxyethylene groups and 1 or 2 oxypropylene groups. In particular, in a case where the polyoxyalkylene chain consists of 7 to 12 oxyethylene groups and 1 or 2 oxypropylene groups, characteristics of the dispersion are suitable.

In a case where D includes an oxypropylene group, the defoaming ability is likely to improve. In a case where the number of oxypropylene groups is 2 or less, the surface tension is low, the wettability is likely to be high, and occurrence of coating repellency during overcoating is unlikely to occur, which is preferable.

In addition, in D, the oxypropylene group may be present between a polyoxyethylene group and a polyoxyethylene group, or may be bonded to a polyoxyethylene chain terminal. In a case where the oxypropylene group is bonded to the polyoxyethylene chain terminal, the defoaming ability is likely to improve. In particular, in a case where the oxypropylene group is bonded to a molecular terminal side of both terminals of the polyoxyethylene chain, the defoaming ability is more likely to improve.

In the nonionic surfactant (2), the average number of oxyethylene groups in one molecule is preferably 5 to 20 and more preferably in a range of 7 to 12. In a case where the average number of oxyethylene groups in one molecule is equal to or more than the lower limit value of the above-described range, favorable storage stability is likely to be obtained. In a case where the average number of oxyethylene groups is equal to or less than the upper limit value of the above-described range, favorable wettability is likely to be obtained.

As the nonionic surfactant (2), it is possible to use a commercially available nonionic surfactant having a normal molecular structure, such as $C_{13}H_{27}O(C_2H_4O)_8C_3H_6OH$, $C_{13}H_{27}O(C_2H_4O)_9C_3H_6OH$, $C_{13}H_{27}O(C_2H_4O)_{10}(C_3H_6O)_2H$, and $C_{16}H_{27}O(C_2H_4O)_{12}(C_3H_6O)_2H$.

An amount of the nonionic surfactant (2) is preferably 2 to 12 parts by mass and more preferably 4 to 12 parts by mass with respect to 100 parts by mass of the fluororesin in the dispersion liquid. In a case where the amount is equal to or more than the lower limit value of the above-described range, favorable storage stability is likely to be obtained. In a case where the amount of the nonionic surfactant (2) is large, the nonionic surfactant (2) is suitable for an application in which a thick coating is adopted, but the performance does not improve even in a case where the amount exceeds the upper limit value of the above-described range; and for economic reasons, it is preferable that the amount does not exceed the upper limit of the above-described range.

In the nonionic surfactant (3), the number of carbon atoms in the alkyl group represented by $R^2$ is preferably in a range of 6 to 18, more preferably 8 to 16, and still more preferably 10 to 14. In a case where the number of carbon atoms in the above-described alkyl group is equal to or more than the lower limit value of the above-described range, the surface tension of the dispersion liquid is likely to be low, and thus the wettability is likely to be high. In a case of being equal to or less than the upper limit value of the above-described range, storage stability of the dispersion liquid is excellent. In a case where the number of carbon atoms in the alkyl group is within the range, the wettability is favorable, and the storage stability is also favorable.

In a case where the alkyl group represented by $R^2$ has a branched structure, the wettability of the dispersion liquid is more likely to increase. The carbon atom having a branch may be a secondary carbon atom or a tertiary carbon atom, and is preferably a secondary carbon atom. Examples of the alkyl group having a branched structure include $C_{10}H_{21}CH(CH_3)CH_2$-, $C_9H_{19}CH(C_3H_7)$-, $C_6H_{13}CH(C_6H_{13})$-, and $CH(CH_3)_2CH_2CH(CH_3)_2CH_2CH(CH(CH_3)_2CH_2$-.

In the alkyl group represented by $R^2$, 10% or less of hydrogen atoms in the alkyl group may be replaced with a halogen element such as a fluorine atom, a chlorine atom, and a bromine atom. In addition, the alkyl group may contain 1 or 2 unsaturated bonds.

E in General Formula (3) is a polyoxyalkylene chain consisting of 1 to 3 oxybutylene groups and 5 to 20 oxyethylene groups. The number of oxybutylene groups is preferably 1 to 2.5 and more preferably 1 to 2. In a case where the number of oxybutylene groups is equal to or more than the lower limit value of the above-described range, the defoaming ability, the wettability, and the viscosity characteristics are likely to be favorable. In a case where the number is equal to or less than the upper limit value, the viscosity of the dispersion liquid is suppressed from increasing, and thus favorable stability is likely to be obtained. In a case where the number of oxybutylene groups is within the above-described range, the properties such as the viscosity, the stability, the defoaming ability, and the wettability are favorable, which is preferable.

The oxybutylene group may be branched or linear, and is preferably branched.

Examples of the oxybutylene group include $-CH_2-CH(C_2H_5)-O-$, $-CH(C_2H_5)CH_2-O-$, $-CH(CH_3)-CH(CH_3)-O-$, $-CH_2CH_2-CH(CH_3)-O-$, and $-CH_2CH_2CH_2CH_2-O-$.

Among these, $-CH_2-CH(C_2H_5)-O-$, $-CH(C_2H_5)CH_2-O-$, and $-CH_2CH_2-CH(CH_3)-O-$ are preferable.

Examples of a raw material of the oxybutylene group include various butylene oxides; and specific examples thereof include 1,2-butylene oxide, 2,3-butylene oxide, tetrahydrofuran, and methyl oxetane.

In the nonionic surfactant (3), the number of oxyethylene groups in the polyoxyalkylene chain is 5 to 20, preferably 6 to 15 and more preferably 7 to 13. In a case where the number of oxyethylene groups is equal to or more than the lower limit value of the above-described range, the storage stability of the dispersion liquid is likely to be favorable. In a case where the number is equal to or less than the upper limit value, the wettability is likely to be favorable. In a case where the number of oxybutylene groups is within the above-described range, the properties such as the viscosity, the stability, the defoaming ability, and the wettability are favorable, which is preferable.

The oxybutylene group in the polyoxyalkylene chain may have a block structure or a random structure.

The oxybutylene group may be present at any portion of the polyoxyalkylene chain, and is preferably present in a region of 70% of the total length of the polyoxyalkylene chain from the $R^2$-O- group side, and more preferably present in a region of 50% of the total length of the polyoxyalkylene chain from the $R^2$-O- group side.

The portion of the polyoxyalkylene chain bonded to the $R^2$-O- group is preferably an oxybutylene group and more preferably a polyoxybutylene chain consisting of 1 or 2 oxybutylene groups. In addition, the portion of the polyoxyalkylene chain bonded to the G group is preferably an oxyethylene group and more preferably a polyoxyethylene chain consisting of 5 to 20 oxyethylene groups.

The polyoxyalkylene chain having the above-described preferred structure has more favorable properties in terms of viscosity, stability, defoaming properties, wettability, etc., which is preferable.

G in General Formula (3) is a hydrogen atom or a methyl group, and is preferably a hydrogen atom.

The nonionic surfactant (3) can be obtained by adding butylene oxide and ethylene oxide to a higher alcohol by a known method. The butylene oxide and the ethylene oxide may be mixed and reacted at the same time, the butylene oxide may be reacted first and then the ethylene oxide may be reacted, or the ethylene oxide may be reacted first and then the butylene oxide may be reacted. A preferable method is the method in which the butylene oxide is first reacted and then the ethylene oxide is reacted.

Examples of the nonionic surfactant (3) include $C_{13}H_{27}OCH_2CH(C_2H_5)O(C_2H_4O)_8H$, $C_{10}H_{21}CH(CH_3)$ $CH_2OCH_2CH(C_2H_5)O(C_2H_4O)_8H$, $C_{10}H_{21}CH(CH_3)CH_2OCH(C_2H_5)CH_2O(C_2H_4O)_8H$, $C_{12}H_{25}OCH_2CH(C_2H_5)$ $O(C_2H_4O)_{10}H$, $C_8H_{17}OCH_2CH(C_2H_5)O(C_2H_4O)_{10}H$, $C_{12}H_{25}OCH_2CH(C_2H_5)O(C_2H_4O)_{10}H$, $C_{13}H_{27}OCH_2CH(C_2H_5)$ $O(C_2H_4O)_{11}H$, $C_{13}H_{27}OCH_2CH_2OCH_2CH(C_2H_5)O(C_2H_4O)_8H$, $C_{12}H_{25}O(CH_2CH(C_2H_5)O)_2(C_2H_4O)_8H$, $C_{10}H_{21}CH(CH_3)CH_2O(C_2H_4O)_9CH_2CH(C_2H_5)OH$, $C_{16}H_{33}OC_2H_4OCH(C_2H_5)CH_2O(C_2H_4O)_9H$, $C_{12}H_{25}OCH_2CH(C_2H_5)O(C_2H_4O)_8CH_2CH(C_2H_5)OH$, $C_{13}H_{27}OCH(CH_3)CH(CH_3)O(C_2H_4O)_8H$, $C_{10}H_{21}CH(CH_3)$ $CH_2OCH(CH_3)CH(CH_3)O(C_2H_4O)_8H$, $C_{10}H_{21}CH(CH_3)CH_2OCH(CH_3)CH(CH_3)O(C_2H_4O)_8H$, $C_{12}H_{25}OCH(CH_3)$ $CH(CH_3)O(C_2H_4O)_8H$, $C_8H_{17}OCH(CH_3)CH(CH_3)O(C_2H_4O)_{10}H$, $C_{12}H_{25}OCH(CH_3)CH(CH_3)O(C_2H_4O)_{10}H$, $C_{13}H_{27}OCH(CH_3)CH(CH_3)O(C_2H_4O)_{11}H$, $C_{13}H_{27}O(CH_2)_4O(C_2H_4O)_8H$, $C_{12}H_{25}O(CH_2)_4O(C_2H_4O)_8H$, $C_8H_{17}O(CH_2)_4O(C_2H_4O)_{10}H$, $C_{12}H_{25}O(CH_2)_4O(C_2H_4O)_{10}H$, $C_{13}H_{27}O(CH_2)_4O(C_2H_4O)_{11}H$, $C_{13}H_{27}O(CH_2)_2CH(CH_3)$ $O(C_2H_4O)_8H$, $C_{12}H_{25}O(CH_2)_2CH(CH_3)O(C_2H_4O)_8H$, $C_8H_{17}O(CH_2)_2CH(CH_3)O(C_2H_4O)_{10}H$, $C_{12}H_{25}O(CH_2)_2CH(CH_3)$ $O(C_2H_4O)_{10}H$, and $C_{13}H_{27}O(CH_2)_2CH(CH_3)O(C_2H_4O)_{11}H$.

In a case where the dispersion liquid contains the nonionic surfactant (3), an amount of the nonionic surfactant (3) is preferably 0.1 to 12 parts by mass and more preferably 0.5 to 11 parts by mass, and still more preferably 1 to 10 parts by mass with respect to 100 parts by mass of the fluororesin in the dispersion liquid. In a case where the amount is equal to or more than the lower limit value of the above-described range, favorable storage stability is likely to be obtained. In addition, cracks are less likely to occur in a coating film of the fluororesin, and coating repellency is less likely to occur. In a case where the amount of the nonionic surfactant (3) is large, the nonionic surfactant (3) is suitable for an application in which a thick coating is adopted, but the performance does not improve even in a case where the amount exceeds the upper limit value of the above-described range; and for economic reasons, it is preferable that the amount does not exceed the upper limit of the above-described range.

In a case where the nonionic surfactant (2) and the nonionic surfactant (3) are used in combination as the nonionic surfactant, the number of oxybutylene groups per one nonionic surfactant molecule as an average value of the entire nonionic surfactant is preferably 0.5 to 2, more preferably 0.7 to 1.7, and still more preferably 0.9 to 1.5.

The nonionic surfactant (2) and the nonionic surfactant (3) may be added separately. A mixture containing the nonionic surfactant (3) and the nonionic surfactant (2) that is produced as a by-product in a case of preparing the nonionic surfactant (3) may be used.

The dispersion liquid contains water as a dispersion medium of the fluororesin particles. The water may be water contained in the aqueous emulsion liquid obtained by the emulsion polymerization, or may be water prepared separately from water in the aqueous emulsion liquid.

The dispersion liquid may contain one or more of a pH adjuster (for example, ammonia or the like), an anionic surfactant, a polyethylene oxide-based thickener, a polyurethane-based thickener, a thixotropic agent, a silicone-based wettability improver, a fluorine-based wettability improver, a preservative, and the like as necessary.

Furthermore, one or more of water-soluble organic solvents, organic solvents (e.g., toluene, xylene, etc.), pigments (e.g., titanium oxide, iron oxide, carbon black, cobalt blue, etc.), glass powder, hollow glass beads, and colorants (e.g., graphite particles, silica particles, mica or titanium oxide-coated mica powder, etc.) may be blended.

<Mixing of the First Fluororesin and the Second Fluororesin>

The mixing of the fluororesin 1 and the fluororesin 2 can be carried out by mixing the crushed product containing the fluororesin 1 after the aforementioned washing and the fluororesin 2. The crushed product substantially consists only of the fluororesin 1. The crushed product is preferably in powder form. That is, when washing the crushed product such as cutting chips or the like generated directly during the production of a secondary molded body, it is preferable to crush and pulverize the washed cutting chips or the like into a powder using a pulverizer or the like.

Examples of the mixing method include the following modes (1) to (4), and the mode (4) is preferable.

(1) A powder of fluororesin 1 (crushed product) and a powder of fluororesin 2 are mixed in a dry manner.
(2) A powder of fluororesin 1 (crushed product) and a dispersion liquid in which the fluororesin 2 is dispersed are mixed with each other.
(3) A dispersion liquid in which the fluororesin 1 (crushed product) is dispersed and a powder of fluororesin 2 are mixed with each other.
(4) A dispersion liquid in which the fluororesin 1 (crushed product) is dispersed and a dispersion liquid in which the fluororesin 2 is dispersed are mixed with each other.

As the dispersion liquid in which the fluororesin 1 is dispersed, a dispersion liquid obtained by mixing a powder of fluororesin 1 produced by the above-described production method with a water-soluble organic solvent is preferable. As the water-soluble organic solvent, from the viewpoint of miscibility of the fluororesin 1 and water, one or more water-soluble organic solvents selected from the group consisting of a non-protonic water-soluble organic solvent and alcohols are preferable. The alcohols may have an amino group or an alkoxy group as a substituent.

As the non-protonic water-soluble organic solvent, acetone, tetrahydrofuran, or acetonitrile is preferable. As the alcohols, methanol, ethanol, propanol, isopropyl alcohol, or 1-methoxy-2-propanol is preferable. Among the above, as the water-soluble organic solvent, isopropyl alcohol is more preferable. The water-soluble organic solvent may be used alone or in combination of two or more kinds thereof.

An amount of the fluororesin 1 is preferably 3% to 70% by mass, more preferably 5% to 65% by mass, and still more preferably 10% to 60% by mass with respect to the total mass of the dispersion liquid in which the fluororesin 1 is dispersed.

As the dispersion liquid in which the fluororesin 2 is dispersed, a dispersion liquid in which the fluororesin 2 produced by the above-described emulsion polymerization is dispersed is preferable. A dispersion liquid in which a nonionic surfactant is blended in the above-described dispersion liquid may be used in order to improve the storage stability. In a case where the powder of fluororesin 2 is used, it is possible to use a powder of fluororesin 2 which is obtained by separating the fluororesin 2 from the solvent in the dispersion liquid in which the fluororesin 2 is dispersed by filtration, drying, or the like.

An amount of the fluororesin 2 is preferably 5% to 40% by mass, more preferably 7% to 35% by mass, and still more preferably 10% to 30% by mass with respect to the total mass of the dispersion liquid in which the fluororesin 2 is dispersed.

In a case of the above-described modes (2) to (4), the total amount of the fluororesin 1 and the fluororesin 2 is preferably 10% to 50% by mass, more preferably 12% to 45% by mass, and still more preferably 15% to 35% by mass with respect to the total mass of the mixture. In a case where the total amount of the fluororesin 1 and the fluororesin 2 is equal to or more than the lower limit value of the above-described range, the fluororesin 1 and the fluororesin 2 are likely to aggregate, and thus solid-liquid separation easily occurs. In a case where the total amount of the fluororesin 1 and the fluororesin 2 is equal to or less than the upper limit value of the above-described range, the mixing of the fluororesin 1 and the fluororesin 2 is likely to be promoted.

In a case of the above-described mode (4), an amount of the water-soluble organic solvent is preferably 1 to 150 parts by mass, more preferably 3 to 140 parts by mass, and still more preferably 5 to 130 parts by mass with respect to 100 parts by mass of water in the mixture.

In the present embodiment, the mixture may be washed. The washing of the mixture can be performed by adding a washing solution to the mixture containing the powders of fluororesin 1 and fluororesin 2. In a case of the above-described modes (2) to (4), the mixture is stirred and aggregated to obtain an aggregate. The above-described aggregate is filtered to separate the aggregate from the solvent, and then washed with a large amount of water. Thereafter, the mixture containing the powders of fluororesin 1 and fluororesin 2 can be obtained by drying.

Examples of a washing solution for washing the mixture include water and an organic solvent. In addition, a washing solution such as an aqueous solution containing two or more kinds thereof may be used. An amount of the washing solution used is preferably 10 to 5,000 parts by mass, more preferably 50 to 4,000 parts by mass, and still more preferably 100 to 3,000 parts by mass with respect to 100 parts by mass of solid contents of the mixture. The washing may be performed by a method 1 in which the mixture is immersed in the washing solution and allowed to stand, a method 2 in which stirring is performed, or a method 3 in which the washing solution is continuously supplied. An immersion time is preferably longer than 0 hours and 100 hours or shorter, more preferably longer than 0 hours and 80 hours or shorter, and still more preferably longer than 0 hours and 60 hours or shorter. A temperature of the washing solution is preferably 0°C to 200°C and more preferably 10°C to 150°C. In a case of the method 1 and the method 2, it is preferable to perform solid-liquid separation of the mixture and the washing solution by filtration or the like, and then perform drying. In the method 1 and the method 2, in a case where a sequence from the addition of the washing solution to the mixture to the solid-liquid separation is counted as one washing, the washing is preferably performed 1 to 30 times, more preferably 1 to 25 times, and still more preferably 2 to 20 times. It is also preferable to perform the washing of the method 3 a plurality of times.

<Fluororesin composition>

The fluororesin composition produced by the production method of the present embodiment contains the fluororesin 1 and the fluororesin 2. The fluororesin composition may contain one or more of other solid components, in addition to the fluororesin 1 and the fluororesin 2.

Examples of the other solid components include solid components used in a production process of the fluororesin 1, solid components used in a production process of the fluororesin 2, and solid components added after the production of the fluororesin 1 and the fluororesin 2.

Specific examples include inorganic fillers, pigments (e.g., titanium oxide, iron oxide, carbon black, cobalt blue, etc.), colorants (e.g., graphite particles, silica particles, mica or titanium oxide-coated mica powder, etc.), and the above-described additives.

Examples of the inorganic filler include reinforcing fibers (glass fibers, carbon fibers, and the like), glass powder, bronze powder, graphite powder, and hollow glass beads.

An amount of the other solid components is preferably 70% by mass or less, more preferably 60% by mass or less, and still more preferably 50% by mass or less with respect to the total mass of solid contents of the fluororesin composition. This amount may be zero.

The total amount of the fluororesin 1 and the fluororesin 2 is preferably 30% to 100% by mass, more preferably 40% to 100% by mass, and still more preferably 50% to 100% by mass with respect to the total mass of solid contents of the fluororesin composition. The fluororesin composition is preferably solid, and more preferably in a powder form.

An amount of the fluororesin 1 is preferably 10% by mass or more, more preferably 10% to 90% by mass, still more preferably 15% to 85% by mass, and particularly preferably 20% to 80% by mass with respect to the total mass of the fluororesin 1 and the fluororesin 2. In a case where the amount of the fluororesin 1 is equal to or more than the lower limit value of the above-described range, when the fluororesin 1 is derived from the cutting chips or the like in a case of manufacturing the above-described secondary molded body (in a case of recycled fluororesin), recycling efficiency is improved. In a case where the amount of the fluororesin 1 is equal to or less than the upper limit value of the above-described range, the surface smoothness and compression strength of the molded body to be obtained is likely to improve.

<Molded body>

The molded body according to the present embodiment is obtained by compression-molding the powder of fluororesin composition described above, and then sintering the compression-molded product.

Specifically, the powder of fluororesin composition is placed in a mold and compression-molded by pressurization to obtain a preliminary molded body, and the obtained preliminary molded body is sintered to obtain a primary molded body. A shape of the primary molded body is not particularly limited. For example, the primary molded body may have a block shape such as a cylindrical shape and a polygonal columnar shape.

In a case of compression-molding the above-described fluororesin composition, it is preferable to pressurize the fluororesin composition at a pressure of 100 to 350 kg/cm$^2$.

The sintering temperature after the above-described preliminary molding is preferably 360°C to 380°C.

The obtained molded body (primary molded body) may be processed into a molded body (secondary molded body) having a desired shape by cutting processing or the like. Examples of use of the secondary molded body include a seal, a packing, a roller, a socket, and a joint.

The molded body according to the present embodiment may be the above-described primary molded body or the above-described secondary molded body.

(Chemical resistance of molded body)

The chemical resistance of the molded bodies can be evaluated by immersion tests 1 to 3 described in the examples below.

The mass change rate 1 in immersion test 1 is preferably 5% or less, more preferably 2% or less, and even more preferably 1% or less.

The mass change rate 2 in immersion test 2 is preferably 5% or less, more preferably 2% or less, and even more preferably 1% or less.

The mass change rate 3 in immersion test 3 is preferably 8% or less, more preferably 5% or less, and even more preferably 1% or less.

<Mechanism underlying the effects>

The fluororesin composition according to the embodiment of the present invention contains the fluororesin 1 having a thermal history of having been heated to a melting point or higher. In a case where the fluororesin 1 is derived from the cutting chips or the like in a case of manufacturing the above-described secondary molded body, trace amounts of impurities such as oil stains and debris from the cutting process may be included. The present inventors have for the first time found that the inclusion of these impurities impairs the chemical resistance of the molded body obtained from the fluororesin composition. Further, it has been found that by washing the crushed product such as the cutting chips or the like, it is possible to suppress the decrease in chemical resistance and improve the recycling efficiency of the fluororesin.

[Examples]

Hereinbelow, the present invention will be described with reference to Examples which, however, should not be construed as limiting the present invention. In the following examples, Example 1 is an example according to the present embodiment, and Example 2 is a reference example.

<Evaluation method>

(Melting point)

A melting point was determined from an endothermic peak in a case where the fluororesin had been heated to 380°C at 10 °C/min in an air atmosphere using a differential scanning calorimeter (DSC 8500, manufactured by PerkinElmer, Inc.). In a case where there were a plurality of endothermic peaks, a peak temperature of the largest endothermic peak was used.

(Average particle diameter)

An average particle diameter was calculated by dispersing the powder of fluororesin in water and measuring a number-based particle size distribution using a laser diffraction/scattering type particle size distribution measuring device (LA-920 measuring device manufactured by HORIBA, Ltd.).

(Standard specific gravity)

The measurement was performed in accordance with ASTM D1457-91a, D4895-91a.

(Thermogravimetric weight loss rate)

Using a NEXTA STA200 manufactured by Hitachi High-Tech Science, the thermogravimetric weight loss rate when increasing the temperature from 30 to 280°C at a rate of 10°C/min was measured and calculated by the aforementioned formula I with respect to each of the crushed products before and after washing, as described below.

(Immersion test 1)

0.5 g of the molded body obtained in Example 1 or Example 2 was placed in a container, and 35 mL of hydrofluoric acid with a concentration of 46.0 to 48.0% by mass was added. The container was sealed and left to stand at 85°C for 7 days while replacing the liquid daily. Then, the molded body was washed with water, dried, and the mass of the molded body after the immersion test was measured. The mass change rate 1 was calculated by the following formula II:

$$\text{Mass change rate } 1 = (W_{B2} - W_{A2})/W_{B2} \times 100 \qquad \text{Formula II}$$

In the formula II, $W_{B2}$ is the mass of the molded body before the immersion test, and $W_{A2}$ is the mass of the molded body after the immersion test.

(Immersion test 2)

0.5 g of the molded body obtained in Example 1 or Example 2 was placed in a container, and a mixed solution of sulfuric acid and hydrogen peroxide (volume ratio of 98% by mass sulfuric acid to 30% by mass hydrogen peroxide solution was 2:1) was added until the molded body was completely immersed. The container was sealed, and the solution was replaced daily while being left to stand at 80°C for 7 days. Then, the molded body was washed with water, dried, and the mass of the molded body after the immersion test was measured. The mass change rate 2 was calculated by the following formula III.

$$\text{Mass change rate } 2 = (W_{B3} - W_{A3}) / W_{B3} \times 100 \quad \text{Formula III}$$

In formula III, $W_{B3}$ is the mass of the molded body before the immersion test, and $W_{A3}$ is the mass of the molded body after the immersion test.

(Immersion test 3)

An immersion test was conducted in the same manner as the immersion test 2, except that the period for leaving the immersed molded body to stand was changed to 28 days. The mass change rate 3 was calculated by the following formula IV.

$$\text{Mass change rate } 3 = (W_{B4} - W_{A4}) / W_{B4} \times 100 \quad \text{Formula IV}$$

In the above formula IV, $W_{B4}$ is the mass of the molded body before the immersion test, and $W_{A4}$ is the mass of the molded body after the immersion test.

(Production Example 1)

A powder of fluororesin A (molding powder) consisting only of TFE units was produced by suspension polymerization. The fluororesin A is a fluororesin having no thermal history of having been heated to a melting point or higher.

(Production Example 2)

The fluororesin A was preliminarily molded, and then sintered at a melting point or higher to produce a primary molded body. A secondary molded article was cut out from the obtained primary molded article to obtain a crushed product (pre-washing crushed product) in the form of cutting chips. 1000 parts by mass of water were added to 100 parts by mass of the crushed product and the resulting was stirred. Then, washing was performed by filtration. After repeating the above washing three times, the washed crushed product was dried at 200°C for 10 hours. By pulverizing the dried crushed product (washed crushed product), a powder of fluororesin B with an average particle size of 50 μm or less was obtained. The fluororesin B is a fluororesin having a thermal history of having been heated to a melting point or higher. A melting point of the obtained fluororesin B was 329°C. In the obtained fluororesin B, there was no temperature at which a melt flow rate was 0.1 to 1,000 g/10 minutes at a temperature that was higher than the melting point of the resin by 20°C or higher, under a load of 49 N, and the fluororesin B was non-melt-formable. 200 g of the fluororesin B and 200 g of isopropanol were mixed to obtain a dispersion liquid B. An amount of the fluororesin B with respect to the total mass of the dispersion liquid B was 50% by mass.

Further, the thermogravimetric weight loss rate calculated from the formula I for the pre-washing crushed product was 4.4%, and the melting point was 326°C. The thermogravimetric weight loss rate calculated from the formula I for the washed crushed product was 0%.

(Production Example 3)

36 g of EEA, 555 g of paraffin wax (melting point: 55°C), and 61.3 liters of deionized water were charged into a 100 L stainless steel autoclave equipped with a baffle and a stirrer. After nitrogen substitution in the autoclave, the inside of the autoclave was depressurized, TFE was introduced thereto, and the temperature was raised to 62°C while stirring. Furthermore, the TFE was fed under pressure until the internal pressure reached 1.765 MPa, and 26.3 g of disuccinic acid peroxide (concentration: 80% by mass; the balance was water) was dissolved in 1 liter of hot water at approximately 70°C, and injected thereto.

Since the internal pressure of the autoclave dropped to 1.716 MPa after approximately 3 minutes, the TFE was fed under pressure to maintain the internal pressure at 1.765 MPa, and the polymerization was carried out. During the polymerization, a total of 53 g of EEA was injected thereto by two separate injections of EEA dissolved in hot water. The autoclave temperature was gradually raised to 72°C, the reaction was terminated when the amount of the TFE charged under pressure was 22 kg, and the TFE in the autoclave was released to the atmosphere. The polymerization time was 105 minutes. After cooling, the solidified paraffin wax on the upper part was removed to obtain a dispersion liquid C in which a fluororesin C consisting only of a TFE unit produced by emulsion polymerization was dispersed. An amount of the fluororesin C in the dispersion liquid C with respect to the total mass of the dispersion liquid C was approximately 25.0% by mass, and the EEA concentration was 0.40 parts by mass with respect to 100 parts by mass of the fluororesin C. An average particle diameter of the fluororesin C in the dispersion liquid C was 0.26 $\mu$m. A standard specific gravity (SSG) of the fluororesin C was 2.21. A melting point of the fluororesin C was 337°C. In the obtained fluororesin C, there was no temperature at which a melt flow rate was 0.1 to 1,000 g/10 minutes at a temperature that was higher than the melting point of the resin by 20°C or higher, under a load of 49 N, and the fluororesin B was non-melt-formable.

(Example 1)

798 g of the dispersion liquid C and 802 g of water were charged into an 8 L stainless steel tank equipped with a baffle and a stirrer, and stirred. 400 g of the dispersion liquid B was added to the stirred dispersion liquid C to obtain a dispersion liquid D containing a mixture of the fluororesin B and the fluororesin C. A mass ratio (fluororesin B:fluororesin C) of the fluororesin B and the fluororesin C in the dispersion liquid D was 1:1. A mass ratio (IPA:water) of the IPA and the water in the dispersion liquid D was 12:88. The total amount of the fluororesin B and the fluororesin C with respect to the total mass of the dispersion liquid D was 20.0% by mass.

The dispersion liquid D was stirred at 680 rpm for 10 minutes using the stirrer to aggregate the solid contents in the dispersion liquid D, and the solvent and the aggregates were separated by filtration. The obtained aggregates were washed with a large amount of water, placed in a pan, vacuum-dried at 25°C for 2 hours or longer, and dried at 200°C for 10 hours or longer to obtain a fluororesin composition 1 that was a mixture of a powder of fluororesin B and a powder of fluororesin C. 345 g of the obtained fluororesin composition 1 was placed in a mold having a diameter of 7.3 mm, and pressurized at 320 kg/cm$^2$ to obtain a preliminary molded body. The preliminary molded body was sintered at 380°C for 2 hours to obtain a molded body. The obtained molded body was subjected to skiving to produce a sheet having a thickness of 0.5 mm, and the resulting was punched into a test piece having a micro-dumbbell shape of 16 mm $\times$ 45 mm to obtain a molded body 1. Immersion tests 1 to 3 were performed using the molded body 1. The results are shown in Table 1.

(Example 2)

A molded body was produced and a molded body 2 as a micro-dumbbell-shaped test piece was obtained in the same manner as in Example 1, except that the fluororesin A was used instead of the fluororesin composition 1. Immersion tests 1 to 3 were performed using molded body 2. The results are shown in Table 1.

[Table 1]

|  |  | Example 1 | Example 2 |
|---|---|---|---|
| Formulation [Parts by mass] | Fluororesin A | 0 | 100 |
|  | Fluororesin B | 50 | 0 |
|  | Fluororesin C | 50 | 0 |
| Evaluation | Immersion test 1 [%] | 0.0 | 0.0 |
|  | Immersion test 2 [%] | 0.1 | 0.1 |
|  | Immersion test 3 [%] | 0.2 | 0.3 |

The molded product 1 in Example 1 showed a small mass change rate in immersion tests 1 to 3, indicating excellent chemical resistance.

Claims

1.    A method for producing a fluororesin composition comprising:

a first fluororesin having a thermal history of having been heated to a melting point or higher; and

a second fluororesin having no thermal history of having been heated to a melting point or higher,
wherein the first fluororesin and the second fluororesin are non-melt-formable fluororesins,
the method comprising washing a crushed product containing the first fluororesin, and mixing the crushed product after washing and the second fluororesin,
wherein a thermogravimetric weight loss rate when the washed crushed product is heated from 30 to 280°C at a rate of 10°C/min is 3% or less as calculated by formula I below:

$$\text{thermogravimetric weight loss rate} = (W_{B1} - W_{A1}) / W_{B1} \times 100 \quad \text{Formula I,}$$

wherein $W_{B1}$ is a mass of the crushed product at 30°C, and $W_{A1}$ is A mass of the crushed product at 280°C.

2. The method according to Claim 1,
   wherein the first fluororesin has a tetrafluoroethylene unit, and an amount of the tetrafluoroethylene unit with respect to a total mass of the first fluororesin is 99% by mass or more.

3. The method according to Claim 1,
   wherein the second fluororesin has a tetrafluoroethylene unit, and an amount of the tetrafluoroethylene unit with respect to a total mass of the second fluororesin is 99% by mass or more.

4. The method according to any one of Claims 1 to 3,
   wherein an amount of the first fluororesin with respect to a total mass of the first fluororesin and the second fluororesin is 10% by mass or more.

## INTERNATIONAL SEARCH REPORT

International application No.

**PCT/JP2024/019936**

### A. CLASSIFICATION OF SUBJECT MATTER

*C08J 3/20*(2006.01)i; *C08L 27/12*(2006.01)i
FI: C08J3/20 Z CEW; C08L27/12

According to International Patent Classification (IPC) or to both national classification and IPC

### B. FIELDS SEARCHED

Minimum documentation searched (classification system followed by classification symbols)

C08J3/00-3/28; C08J11/00-11/28; C08K3/00-13/08; C08L1/00-101/14; B29C43/02;

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/244433 A1 (BLANC BIJOU CO., LTD.) 26 December 2019 (2019-12-26) entire text, fig. 9 | 1-4 |
| A | WO 2022/211092 A1 (DAIKIN INDUSTRIES, LTD.) 06 October 2022 (2022-10-06) entire text | 1-4 |
| A | WO 2022/211094 A1 (DAIKIN INDUSTRIES, LTD.) 06 October 2022 (2022-10-06) entire text | 1-4 |
| A | JP 2015-108126 A (STARLITE IND) 11 June 2015 (2015-06-11) entire text | 1-4 |
| A | CN 114437403 A (ZHEJIANG NINGCHI ENVIRONMENTAL PROTECTION MATERIAL SCIENCE AND TECHNOLOGY LIMITED COMPANY) 06 May 2022 (2022-05-06) entire text | 1-4 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/019936**

| Patent document cited in search report | | | Publication date (day/month/year) | Patent family member(s) | | | Publication date (day/month/year) |
|---|---|---|---|---|---|---|---|
| WO | 2019/244433 | A1 | 26 December 2019 | US entire text CN | 2021/0362378 112543700 | A1 A | |
| WO | 2022/211092 | A1 | 06 October 2022 | US entire text EP CN KR | 2024/0026142 4317220 117043262 10-2023-0145445 | A1 A1 A A | |
| WO | 2022/211094 | A1 | 06 October 2022 | US entire text EP CN KR | 2024/0026141 4317221 117043264 10-2023-0146631 | A1 A1 A A | |
| JP | 2015-108126 | A | 11 June 2015 | (Family: none) | | | |
| CN | 114437403 | A | 06 May 2022 | (Family: none) | | | |

Form PCT/ISA/210 (patent family annex) (July 2022)

**EP 4 722 275 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023091858 A
- JP 6612001 B
- WO 2021085470 A
- WO 2022181662 A